# FASCICULE DE BREVET EUROPEEN

(11) **EP 4 453 386 B1**
(45) Date de publication et mention de la délivrance du brevet: **06.05.2026**
(21) Numéro de dépôt: 22844255.4
(22) Date de dépôt: 21.12.2022
(51) Int. Cl.: F01D 9/06, F01D 25/18, F02C 7/22, F16L 55/24, B08B 9/032

(54) **TURBOMACHINE D'AÉRONEF COMPRENANT UN DISPOSITIF POUR INHIBANT L'ACCUMULATION DE COKE DANS UNE CONDUITE**
TURBOTRIEBWERK EINES FLUGZEUGES, DAS EINE ANORDNUNG ZUR VERHINDERUNG VON KOKSABLAGERUNG IN EINEM ROHR ENTHÄLT
AIRCRAFT TURBOMACHINE COMPRISING A DEVICE IHNIBATING THE ACCUMULATION OF COKE IN A PIPE

(30) Priorité: 24.12.2021 FR 2114477
(43) Date de publication de la demande: 30.10.2024
(73) Titulaire: Safran Helicopter Engines, 64510 Bordes (FR)
(72) Inventeur: FULLERINGER, Benjamin Nicolas, 77550 MOISSY-CRAMAYEL (FR); DEBAT, Alexandre, 77550 MOISSY-CRAMAYEL (FR); FONTS, Pierre-Marie, 77550 MOISSY-CRAMAYEL (FR); ROBERT, Olivier, 77550 MOISSY-CRAMAYEL (FR)
(74) Mandataire: Gevers & Orès
(86) Numéro de dépôt international: PCT/FR2022/052466
(87) Numéro de publication internationale: WO 2023/118750

(56) Documents cités:
- EP-A1- 2 900 974
- EP-A2- 0 822 345
- FR-A1- 3 041 700
- US-A1- 2014 137 566
- US-B2- 9 644 495
- "COKE MITIGATION DEVICES FOR COMBUSTORS ED - Darl Kuhn", IP.COM, IP.COM INC., WEST HENRIETTA, NY, US, 9 May 2019 (2019-05-09), XP013183125, ISSN: 1533-0001

## Description

### Domaine technique de l'invention

La présente invention concerne le domaine général de l'aéronautique. Elle vise plus particulièrement une turbomachine d'aéronef.

### Arrière-plan technique

L'arrière-plan technique comprend notamment les documents US-B2-9,644,495, EP-A2-0 822 345 et EP-A1-2 900 974.

De manière conventionnelle, une turbomachine d'aéronef comprend un générateur de gaz comprenant le long d'un axe longitudinal au moins un compresseur, une chambre de combustion, et au moins une turbine.

Un flux d'air pénètre dans le générateur de gaz et est comprimé dans le ou les compresseurs. Ce flux d'air comprimé est mélangé à du carburant et brûlé dans la chambre de combustion puis les gaz de combustion sont détendus dans la ou les turbines. Cette détente provoque la rotation du ou des rotors de turbine, ce qui entraîne la rotation du ou des rotors de compresseur. Les gaz de combustion sont éjectés par une tuyère pour fournir une poussée qui peut s'ajouter à une poussée conférée par au moins une hélice de propulsion de la turbomachine.

Pour fonctionner, la turbomachine a besoin de liquide tel que du carburant pour alimenter la chambre de combustion, et de l'huile pour lubrifier des composants mécaniques tels que des paliers de guidage des rotors. Pour cela, la turbomachine comprend des conduites d'alimentation en liquide. La turbomachine comprend notamment une ou plusieurs conduites d'alimentation en huile de gicleurs d'huile sur des paliers par exemple. La turbomachine comprend en outre une ou plusieurs conduites d'alimentation en carburant d'injecteurs de carburant dans la chambre de combustion.

En fonctionnement ou lors de l'arrêt moteur, il règne des températures importantes dans la turbomachine et l'huile et le carburant peuvent atteindre des températures relativement importantes. Ces hautes températures sont susceptibles de favoriser la génération de cokes dans les conduites. Dans la présente demande, on entend par « coke », un amas solide résultant du dépôt et de l'accumulation de résidus d'huile ou de carburant, lié à la dégradation thermique de ce liquide. Ce phénomène est appelé cokéfaction et peut provoquer à termes une obstruction partielle voire totale de la conduite.

Lorsque les dépôts de coke conduisent à une diminution importante du débit d'huile injecté aux paliers par exemple, une défaillance rapide et sévère des paliers peut survenir (grippage du roulement) avec des dommages importants sur la turbomachine. Ainsi, la cokéfaction de la conduite d'alimentation en huile de paliers en zone chaude constitue un enjeu majeur de sécurité et de fiabilité. Il est donc important d'éviter ou de limiter ce phénomène ou de trouver une solution pour supprimer le coke susceptible de se former dans les conduites. Une solution consiste à protéger thermiquement les conduites pour limiter l'échauffement du liquide par rayonnement thermique des parties chaudes du moteur (cf. par exemple FR-A1-3 041 700). Une autre solution consiste à ventiler les conduites pour limiter également l'échauffement du liquide. Toutefois, ces solutions sont relativement complexes et coûteuses à mettre en œuvre, et ne sont donc pas entièrement satisfaisantes. De plus, ces solutions consistent à adresser la problématique du côté de la thermique, qui est l'origine du problème. Cependant, la phase d'arrêt moteur reste problématique puisqu'il n'y a plus de flux d'huile ou d'air pour évacuer les calories emmagasinées par les parties chaudes du moteur.

La présente invention propose une solution simple, efficace et économique à ce besoin.

### Résumé de l'invention

La présente invention propose une turbomachine d'aéronef, comportant un générateur de gaz comprenant le long d'un axe longitudinal au moins un compresseur, une chambre de combustion et au moins une turbine, la turbomachine comportant en outre au moins une conduite d'alimentation en liquide d'au moins un gicleur d'huile, cette conduite comportant des portions rectilignes et des portions coudées et comprenant au moins une zone dans laquelle le liquide est susceptible de cokéfier, caractérisée en ce qu'elle comprend au moins un élément de turbulence en saillie au niveau de ladite au moins une zone dans la conduite.

La présente invention propose ainsi d'équiper la conduite avec un ou plusieurs éléments internes de turbulence de façon à ce que ces éléments génèrent des turbulences dans l'écoulement du liquide qui vont nettoyer la conduite en chassant les dépôts éventuels de coke. Les éléments de turbulence sont donc de préférence positionnés dans les zones dans lesquelles du coke est susceptible de se former. Les éléments de turbulence permettent un auto-nettoyage de la conduite, ce qui est avantageux par rapport aux solutions de la technique antérieure.

La turbomachine peut comprendre une ou plusieurs des caractéristiques suivantes, prises seules ou en combinaison les unes avec les autres :
- la conduite comprend plusieurs zones successives dans lesquelles le liquide est susceptible de cokéfier, au moins un élément de turbulence étant situé au niveau de chacune de ces zones dans la conduite.
- les éléments de turbulence sont de même type ;
- les éléments de turbulence sont de types différents ;
- le ou chaque élément de turbulence est un obstacle ou un guide sous forme de plot, ailette, hélice, filet, ou bande tordue ;
- le ou chaque élément de turbulence traverse en toute ou partie la conduite ;
- la conduite alimente en huile un gicleur qui est configuré pour lubrifier au moins un palier de la turbomachine.

La présente invention concerne également un procédé de décokéfaction d'une conduite d'alimentation en liquide, destiné à être mis en œuvre dans une turbomachine selon l'invention, comprenant :
- une première phase de fonctionnement du générateur de gaz dans laquelle du liquide est acheminé par la conduite jusqu'à au moins un gicleur d'huile, en vue de son alimentation avec ce liquide,
- une deuxième phase d'arrêt du générateur de gaz dans laquelle du coke est susceptible de se former dans ladite au moins une zone de la conduite,
- une troisième phase de redémarrage du générateur de gaz dans laquelle du liquide est acheminé par la conduite jusqu'audit gicleur d'huile, ledit au moins un élément de turbulence générant des turbulences dans le liquide qui sont configurées pour décoller et évacuer le coke de ladite au moins une zone.

Le procédé selon l'invention est particulièrement avantageux dans la mesure où il permet d'évacuer les dépôts de coke dans la conduite de manière automatique à chaque cycle d'arrêt-démarrage sans intervention humaine ni de méthode spécifique. C'est lors des phases de redémarrage et de fonctionnement moteur du cycle suivant que le ou les éléments vont générer des turbulences permettant de nettoyer la conduite à chassant et décrochant les faibles dépôts éventuels de coke. Contrairement à la technique antérieure, la succession de tels cycles d'arrêt-démarrage n'entraînera pas d'accumulation progressive de coke.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en coupe axiale d'une turbomachine d'aéronef ;
[Fig.2] la figure 2 est une vue schématique à plus grande échelle et plus détaillé d'une partie de la turbomachine de la figure 1 ;
[Fig.3] la figure 3 est une vue schématique en perspective d'une partie d'une conduite d'alimentation en liquide de la turbomachine de la figure 1 ;
[Fig.4a-4b] les figures 4a et 4b représentent de manière très schématique des exemples d'éléments de turbulence pour une conduite d'alimentation en liquide ;
[Fig.4c-4d] les figures 4c et 4d représentent de manière très schématique d'autres exemples d'éléments de turbulence pour une conduite d'alimentation en liquide ; et
[Fig.4e] la figure 4e représente de manière très schématique un autre exemple d'élément de turbulence pour une conduite d'alimentation en liquide.

### Description détaillée de l'invention

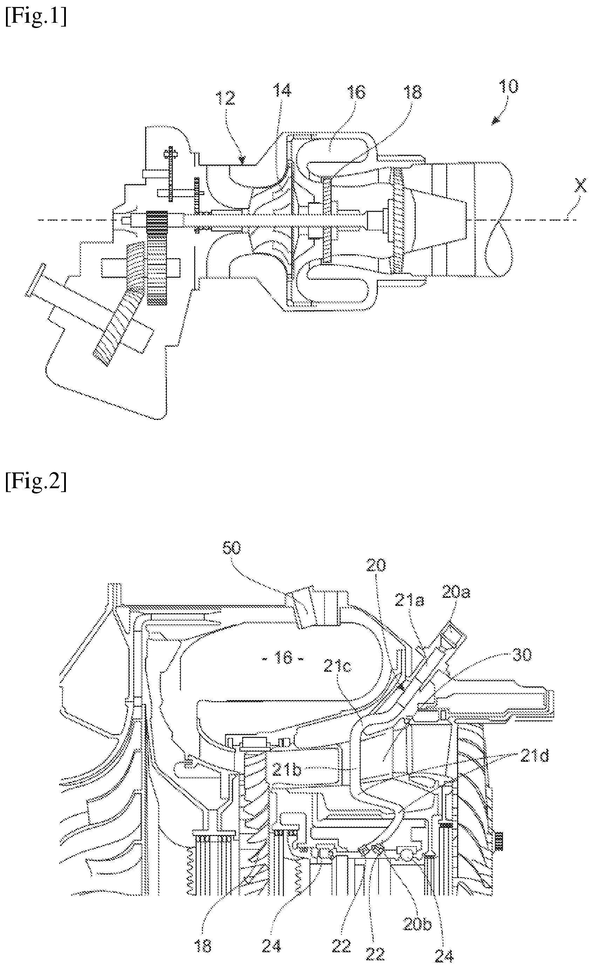

La figure 1 montre une turbomachine 10 d'un aéronef et plus particulièrement d'un hélicoptère même si cette application n'est pas limitative.

La turbomachine 10 comprend pour l'essentiel un générateur de gaz 12 qui comprend le long d'un axe longitudinal X au moins un compresseur 14, une chambre de combustion 16, et au moins une turbine 18.

La figure 2 montre de manière plus détaillée l'environnement autour de la chambre de combustion 16 et de la turbine 18. Cette figure 2 montre une conduite 20 d'alimentation en liquide, et plus particulièrement en huile, d'au moins un gicleur d'huile 22.

La conduite 20 a une extrémité amont 20a et une extrémité aval 20b par référence à l'écoulement de l'huile dans la conduite 20. L'extrémité amont 20a, située à gauche sur le dessin, est reliée à une source d'huile, par exemple par l'intermédiaire d'une pompe. L'extrémité aval 20b est reliée à au moins un gicleur 22 qui est configuré pour projeter de l'huile sur un ou plusieurs paliers 24 de guidage du ou des rotors de turbine.

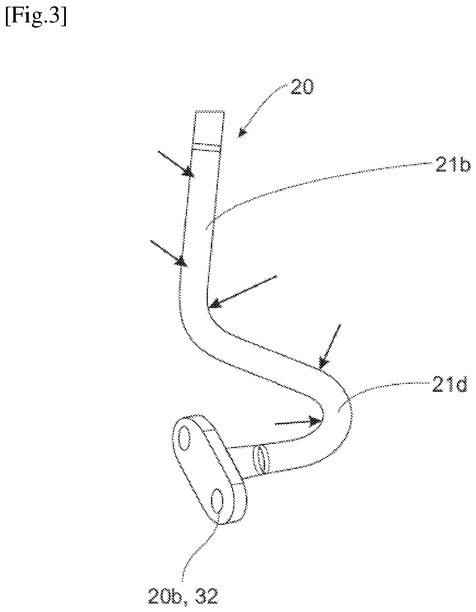

La conduite 20 comprend des portions rectilignes 21a, 21b et des portions coudées 21c, 21d. Dans l'exemple représenté, la conduite 20 comprend :
- une première portion rectiligne 21a qui s'étend sensiblement radialement en aval de la chambre de combustion 16,
- une portion coudée 21c à angle droit situé à l'extrémité aval de la portion rectiligne 21a,
- une portion rectiligne 21b qui s'étend radialement par rapport à l'axe X depuis la portion coudée 21c ; cette portion rectiligne 21a passe à travers un distributeur 30 de la turbine 18 et donc à travers la veine d'écoulement du flux de gaz dans la turbine, et
- une portion coudée 21d en U ou V qui est située radialement à l'intérieur de la chambre de combustion 16, et qui relie l'extrémité radialement interne de la portion rectiligne 21b aux gicleurs 22, par exemple par l'intermédiaire d'une bride de fixation 32 (cf. figure 3).

La conduite 20 comprend au moins une zone dans laquelle l'huile est susceptible de cokéfier. La figure 3 montre plusieurs zones successives de ce type avec des flèches. La conduite 20 peut avoir des zones réparties sur toute son étendue depuis son extrémité amont jusqu'à son extrémité aval.

Selon l'invention, la conduite 20 comprend au moins un élément de turbulence dans la zone ou chacune des zones de la conduite.

Les éléments de turbulence peuvent être de même type ou de types différents.

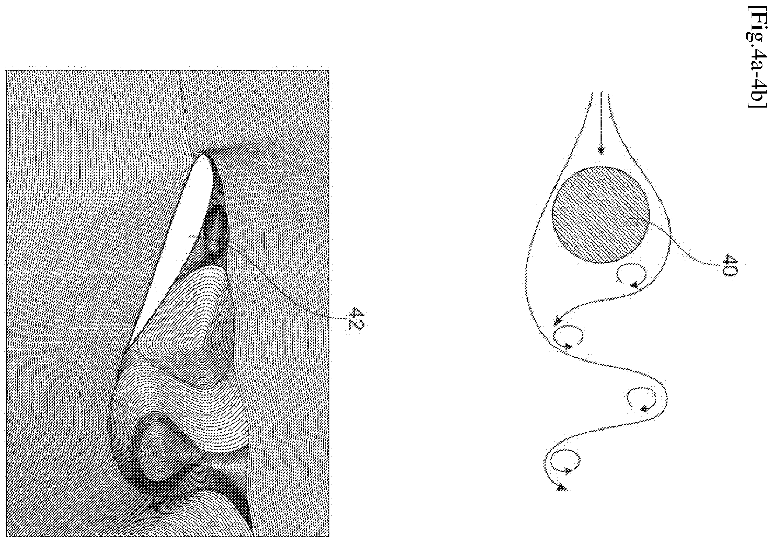

Les figures 4a à 4e montrent plusieurs exemples de réalisation des éléments de turbulence.

Chacun de ces éléments de turbulence peut être un obstacle (plot, ailette, ...) ou un guide (, hélice, filet, bande torsadée, ...).

La figure 4a montre un élément de turbulence 40 sous forme de plot cylindrique. Ce plot est en saillie sur une surface interne de la conduite 20 et génère des turbulences dans l'écoulement d'huile.

La figure 4b montre un élément de turbulence 42 sous forme d'ailettes ou d'aubes. Cet élément a un profil aérodynamique et est en saillie sur une surface interne de la conduite 20 pour générer des turbulences sous forme de sillages dans l'écoulement d'huile.

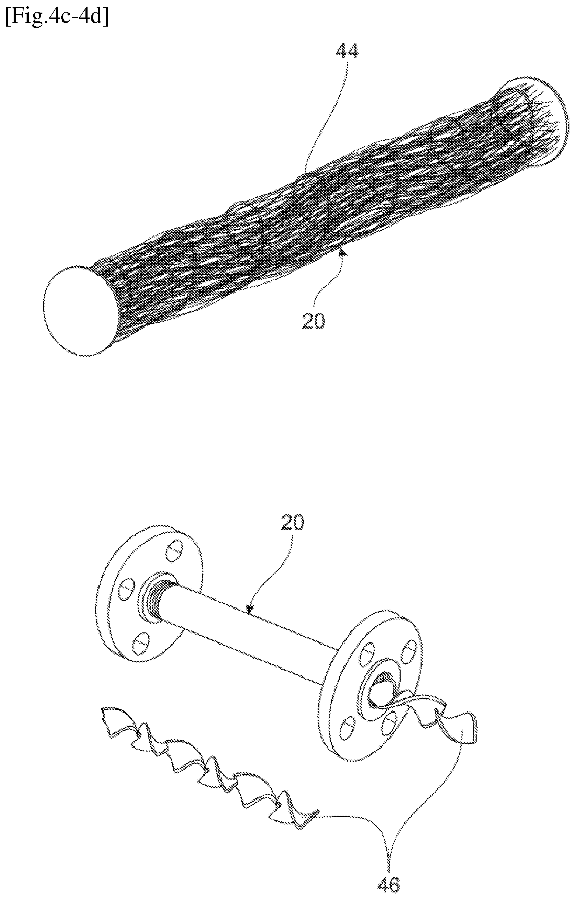

La figure 4c montre un élément de turbulence 44 sous forme d'hélices ou de nervures hélicoïdales ou filet hélicoïdal, en saillie sur une surface interne de la conduite 20 ou engagé dans la conduite 20 pour générer des turbulences dans l'écoulement d'huile.

La figure 4d montre un élément de turbulence 46 sous forme de bandes torsadées qui est engagée dans la conduite 20 pour générer des turbulences dans l'écoulement d'huile.

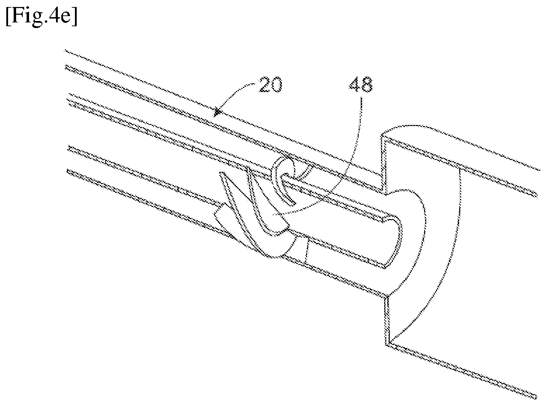

La figure 4e montre un élément de turbulence 48 sous forme d'hélice qui est engagée ou formée dans la conduite 20 pour générer des turbulences dans l'écoulement d'huile. L'hélice comprend une rangée annulaire d'ailettes, comme c'est le cas d'une hélice de ventilateur par exemple. Cette hélice est fixe dans la conduite 20.

La conduite 20 évoquée dans ce qui précède a été décrite en relation avec une alimentation en huile. Dans un exemple qui ne fait pas partie de l'invention revendiquée, la conduite pourrait être utilisée pour l'alimentation en carburant d'un injecteur de carburant 50 qui équipe la chambre de combustion (cf. figure 2).

La présente invention concerne également un procédé automatique de décokéfaction de la conduite 20, qui comprend :
- une première phase de fonctionnement du générateur de gaz 12 dans laquelle de l'huile est acheminée par la conduite 20 jusqu'au gicleur 22 en vue de son alimentation,
- une deuxième phase d'arrêt du générateur de gaz 12 dans laquelle le coke est susceptible d'apparaître dans au moins une zone de la conduite 20,
- une troisième phase de redémarrage du générateur de gaz 12 dans laquelle du liquide est acheminé par la conduite 30 jusqu'au gicleur 22, le ou les éléments de turbulence générant alors des turbulences dans l'huile ou le carburant qui sont configurés pour décoller et évacuer le coke de la ou chaque zone. Le démarrage ainsi que la phase de fonctionnement qui s'en suit contribue à décoller et évacuer la faible quantité de coke généré dans la seule phase d'arrêt précédente.

## Revendications

1. Turbomachine (10) d'aéronef, comportant un générateur de gaz (12) comprenant le long d'un axe longitudinal (X) au moins un compresseur (14), une chambre de combustion (16) et au moins une turbine (18), la turbomachine (10) comportant en outre au moins une conduite (20) d'alimentation en liquide d'au moins un gicleur d'huile (22), cette conduite (20) comportant des portions rectilignes (21a, 21b) et des portions coudées (21c, 21d) et comprenant au moins une zone dans laquelle le liquide est susceptible de cokéfier, **caractérisée en ce qu'**elle comprend au moins un élément de turbulence (40-48) en saillie au niveau de ladite au moins une zone dans la conduite.

2. Turbomachine (10) selon la revendication 1, dans laquelle la conduite (20) comprend plusieurs zones successives dans lesquelles le liquide est susceptible de cokéfier, au moins un élément de turbulence (40-48) étant situé au niveau de chacune de ces zones dans la conduite.

3. Turbomachine (10) selon la revendication 2, dans laquelle les éléments de turbulence (40-48) sont de même type.

4. Turbomachine (10) selon la revendication 2, dans laquelle les éléments de turbulence (40-48) sont de types différents.

5. Turbomachine (10) selon l'une des revendications précédentes, dans laquelle le ou chaque élément de turbulence (40-48) est un obstacle ou un guide sous forme de plot, ailette, hélice, filet, ou bande tordue.

6. Turbomachine (10) selon l'une des revendications précédentes, dans laquelle le ou chaque élément de turbulence (40-48) traverse en toute ou partie la conduite (20).

7. Turbomachine (10) selon l'une des revendications précédentes, dans laquelle la conduite (20) alimente en huile ledit au moins un gicleur (22) qui est configuré pour lubrifier au moins un palier (24) de la turbomachine.

8. Procédé de décokéfaction d'une conduite d'alimentation en liquide, destiné à être mis en œuvre dans une turbomachine (10) selon l'une des revendications précédentes, comprenant :
- une première phase de fonctionnement du générateur de gaz (12) dans laquelle du liquide est acheminé par la conduite (20) jusqu'à au moins un gicleur d'huile (22) en vue de son alimentation avec ce liquide,
- une deuxième phase d'arrêt du générateur de gaz (12) dans laquelle du coke est susceptible de se former dans ladite au moins une zone de la conduite (20),
- une troisième phase de redémarrage du générateur de gaz (12) dans laquelle du liquide est acheminé par la conduite (20) jusqu'audit gicleur d'huile (22), ledit au moins un élément de turbulence (42-48) générant des turbulences dans le liquide qui sont configurées pour décoller et évacuer le coke de ladite au moins une zone.

## Patentansprüche

1. Turbotriebwerk (10) eines Luftfahrzeugs, das einen Gasgenerator (12) beinhaltet, der entlang einer Längsachse (X) mindestens einen Kompressor (14), eine Verbrennungskammer (16) und mindestens eine Turbine (18) umfasst, wobei das Turbotriebwerk (10) weiter mindestens eine Flüssigkeitsversorgungsleitung (20) für mindestens eine Ölstrahldüse (22) umfasst, wobei diese Leitung (20) geradlinige Abschnitte (21a, 21b) und gekrümmte Abschnitte (21c, 21d) beinhaltet, und mindestens eine Zone umfasst, in der die Flüssigkeit anfällig ist, zu verkoken, **dadurch gekennzeichnet, dass** es mindestens ein Verwirbelungselement (40-48) umfasst, das im Bereich der mindestens einen Zone in der Leitung hervorsteht.

2. Turbotriebwerk (10) nach Anspruch 1, wobei die Leitung (20) mehrere aufeinanderfolgende Bereiche umfasst, in denen die Flüssigkeit anfällig ist, zu verkoken, wobei sich mindestens ein Verwirbelungselement (40-48) im Bereich jedes dieses Bereiche in der Leitung befindet.

3. Turbotriebwerk (10) nach Anspruch 2, wobei die Verwirbelungselemente (40-48) vom selben Typ sind.

4. Turbotriebwerk (10) nach Anspruch 2, wobei die Verwirbelungselemente (40-48) von unterschiedlichen Typen sind.

5. Turbotriebwerk (10) nach einem der vorstehenden Ansprüche, wobei das oder jedes Verwirbelungselement (40-48) ein Hindernis oder eine Führung in Form eines Stifts, einer Rippe, eines Rotors, Gewindes, oder gebogenen Streifens ist.

6. Turbotriebwerk (10) nach einem der vorstehenden Ansprüche, wobei das oder jedes Verwirbelungselement (40-48) die Leitung (20) vollständig oder teilweise durchquert.

7. Turbotriebwerk (10) nach einem der vorstehenden Ansprüche, wobei die Leitung (20) die mindestens eine Strahldüse (22) mit Öl versorgt, die konfiguriert ist, um mindestens ein Lager (24) des Turbotriebwerks zu schmieren.

8. Verfahren zum Entkoken einer Flüssigkeitsversorgungsleitung, das dazu bestimmt ist, in einem Turbotriebwerk (10) nach einem der vorstehenden Ansprüche umgesetzt zu werden, umfassend:
- eine erste Betriebsphase des Gasgenerators (12), in der Flüssigkeit durch die Leitung (20) bis zu mindestens einer Ölstrahldüse (22) in Hinblick auf deren Versorgung mit dieser Flüssigkeit zugeführt wird,
- eine zweite Stopp-Phase des Gasgenerators (12), in der es möglich ist, dass sich in dem mindestens einen Bereich der Leitung (20) Koks bildet,
- eine dritte Neustartphase des Gasgenerators (12), in der Flüssigkeit durch die Leitung (20) bis zur Ölstrahldüse (22) zugeführt wird, wobei das mindestens eine Verwirbelungselement (42-48) Verwirbelungen in der Flüssigkeit generiert, die konfiguriert sind, um das Koks aus dem mindestens einen Bereich zu lösen und abzuführen.

## Claims

1. An aircraft turbomachine (10), comprising a gas generator (12) comprising, along a longitudinal axis (X), at least one compressor (14), a combustion chamber (16) and at least one turbine (18), the turbomachine (10) further comprising at least one duct (20) for supplying liquid to at least one oil nozzle (22), this duct (20) comprising rectilinear portions (21a, 21b) and bent portions (21c, 21d) and comprising at least one area in which the liquid is liable to coke, **characterized in that** it comprises at least one turbulence element (40-48) projecting at the level of said at least one area in the duct.

2. The turbomachine (10) according to claim 1, wherein the duct (20) comprises several successive areas in which the liquid is liable to coke, at least one turbulence element (40-48) being located at each of these areas in the duct.

3. The turbomachine (10) according to claim 2, wherein the turbulence elements (40-48) are of the same type.

4. The turbomachine (10) according to claim 2, wherein the turbulence elements (40-48) are of different types.

5. The turbomachine (10) according to one of the preceding claims, wherein said or each turbulence element (40-48) is an obstacle or a guide in the form of a stud, fin, propeller, thread or twisted strip.

6. The turbomachine (10) according to one of the preceding claims, wherein said or each turbulence element (40-48) passes through all or part of the duct (20).

7. The turbomachine (10) according to one of the preceding claims, wherein the duct (20) supplies oil to said at least one nozzle (22) which is configured to lubricate at least one bearing (24) of the turbomachine.

8. A method of decoking a liquid supply duct, for use in a turbomachine (10) according to any one of the preceding claims, comprising:
- a first operating phase of the gas generator (12) wherein the liquid is conveyed by the duct (20) to at least one oil nozzle (22), in order to supply it with this liquid,
- a second stop phase of the gas generator (12) wherein the coke is liable to form in said at least one area of the duct (20),
- a third restarting phase of the gas generator (12) wherein liquid is conveyed through the duct (20) to said oil nozzle (22), said at least one turbulence element (42-48) generating turbulences in the liquid which are configured to lift and evacuate the coke from said at least one area.
